# EUROPEAN PATENT APPLICATION

(11) **EP 3 540 655 A1**
(43) Date of publication of application: **18.09.2019**
(21) Application number: 19155479.9
(22) Date of filing: 05.02.2019
(51) Int. Cl.: G06N 7/00, G06N 7/04

(54) **LEARNING PROGRAM, LEARNING METHOD, AND LEARNING APPARATUS**

(30) Priority: 13.03.2018 JP 2018045889
(71) Applicant: FUJITSU LIMITED, Kanagawa 211-8588 (JP)
(72) Inventor: UEMURA, Kento, Kanagawa, 211-8588 (JP); KATOH, Takashi, Kanagawa, 211-8588 (JP); YASUTOMI, Suguru, Kanagawa, 211-8588 (JP); ENDOH, Toshio, Kanagawa, 211-8588 (JP)
(74) Representative: Hoffmann Eitle

(57) **Abstract**

A learning method for an auto-encoder is performed by a computer. The method includes: by using a discriminator configured to generate an estimated label based on a feature value generated by an encoder of an auto-encoder and input data, causing the discriminator to learn such that a label corresponding the input data and the estimated label are matched; and by using the discriminator, causing the encoder to learn such that the label corresponding to the input data and the estimated label are separated.

## Description

### FIELD

The embodiments discussed herein are related to a storage medium storing a learning program, a learning method, and a learning apparatus.

### BACKGROUND

An auto-encoder which trains an encoder and a decoder has been known as a learner using labeled data acquired by adding a label y to an input x. For example, the encoder is configured to convert an input x to a feature value z while the decoder is configured to convert the feature value z and the label y to a reconfigured data x'. In this case, the encoder and decoder learn such that a lower error exists between the original input x and the reconfigured data x', and the encoder learns such that a low error exists between a distribution of the feature value z converted from the original data x and a target distribution.

In recent years, a technology has also been known which automatically generates an analogy (analogy data) of labeled data. More specifically, for example, from a pair of data x and a label y, reconfigured data x' is inferred with varied labels y. For example, from a character image having a label indicating a certain character, character images having similar styles are inferred. From audio data having a label indicating a detail of a speech, other speech audio data having similar tone qualities and voices are inferred. Examples of the technologies include Japanese Laid-open Patent Publication No. 2011-118496 and Japanese Laid-open Patent Publication No. 2004-326200.

### PROBLEM TO BE SOLVED

Such automatic generation of analogy data is generally considered to be executed by an auto-encoder, but the auto-encoder may generate analogy data with low precision. For example, the encoder of the auto-encoder learns to convert to a feature value z which actively represents information other than the label y, which is not directly given to the decoder. Therefore, when the learning advances, the encoder generates a feature value z that is information including the label y or information close to the label y, and the decoder converts from the label y and the feature value z to reconfigured data x' having a low error with respect to the input x. This means that the reconfigured data x' gets closer to the input x.

As a result, even when the auto-encoder repeats learning for generating analogy data, reconfigured data x' close to the input x may be generated from the input x with improved precision, but the precision of the analogy data is not improved. Through trial and error such as setting the size of the feature value z in the auto-encoder and changing data to learn, learning may be designed for improved precision of analogy data, which however requires an increased number of man-hours and is not realistic.

According to an aspect, it is an object to provide a storage medium storing a learning program, a learning method and a learning apparatus which may improve precision of generation of analogy data.

### SUMMARY

According to an aspect of the embodiments, a learning method for an auto-encoder is performed by a computer. The method includes: by using a discriminator configured to generate an estimated label based on a feature value generated by an encoder of an auto-encoder and input data, causing the discriminator to learn such that a label corresponding the input data and the estimated label are matched; and by using the discriminator, causing the encoder to learn such that the label corresponding to the input data and the estimated label are separated.

### EFFECT OF INVENTION

According to an embodiment, the precision for generating analogy data may be improved.

### BRIEF DESCRIPTION OF DRAWINGS

FIG. 1 illustrates a learning apparatus according to Embodiment 1;
FIG. 2 is a functional block diagram illustrating a functional configuration of the learning apparatus according to Embodiment 1;
FIG. 3 is a flowchart illustrating a flow of a learning process;
FIG. 4 is a flowchart illustrating a flow of an analogy process;
FIG. 5 illustrates from initialization to an initial state of the learning process;
FIG. 6 illustrates a learning initial stage of the learning process;
FIG. 7 illustrates learning of an evaluator;
FIG. 8 illustrates learning of an encoder;
FIG. 9 illustrates a learning result and an analogy result;
FIG. 10 illustrates learning in the related art;
FIG. 11 illustrates learning in the related art;
FIG. 12 illustrates a learning result in the related art;
FIG. 13 is a learning example also using unlabeled data; and
FIG. 14 illustrates a hardware configuration example.

### DESCRIPTION OF EMBODIMENTS

With reference to the drawings, embodiments of a storage medium storing a learning program, a learning method, and a learning apparatus will be described in detail below. It is not intended that embodiments are limited by the following embodiments. The following embodiments may be combined properly without departing from consistency.

### Embodiment 1

### Description of Learning Apparatus

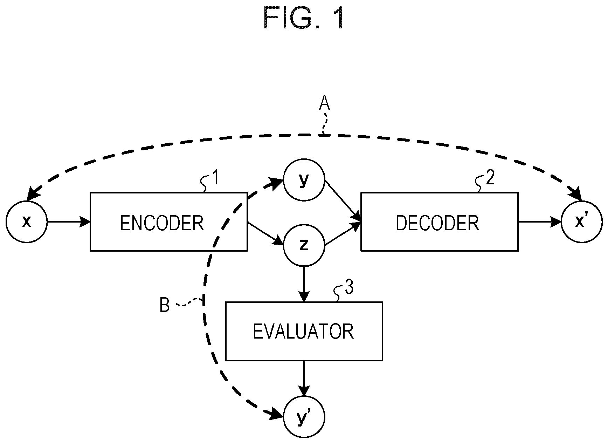

FIG. 1 illustrates a learning apparatus according to Embodiment 1. The learning apparatus illustrated in FIG. 1 includes an encoder 1, a decoder 2, and an evaluator 3, and the learning apparatus is an example of an auto-encoder configured to learn by using labeled data (supervised data) to which a label is added. The evaluator 3 is an example of a discriminator.

According to Embodiment 1, although the expressions "encoder 1" and "decoder 2" are used for describing an example of learning of reconfiguration, it is not intended that the expressions limit the learning details and functions. The learners such as the encoder 1, the decoder 2, and the evaluator 3 may be configured based on a neural network, for example, and may apply various learning schemes such as a gradient method. An image of a hand-written character will be taken as an example of learning, but it is merely given for illustration purpose and does not limit learning details and learning targets.

According to this embodiment, an example will be described in which learning is performed by using labeled data (x, y). For example, in a case where an image of a hand-written character is a learning target, x is image data of a photograph, y is a label representing which character is written, and z is data (vector) representing a feature not related to the written character, such as a line width and a tilt of the character. In a case where speech audio data is a learning target, x is audio data, y is text data of a speech content thereof, and z is data (vector) representing a feature not related to the speech content, such as speakers' tone, noise, and the volume of the speech.

The encoder 1 receives input of x of labeled data (x, y) and generates a feature value z from the input x. The decoder 2 reconstructs reconfigured data x' from the feature value z and a label y. The evaluator 3 generates an estimated label y' from the feature value z.

The encoder 1 and the decoder 2 learn such that an error (A) is low between an input x and a reconfigured data x' in order to precisely reconstruct the input x. The encoder 1 further learns such that an error (B) is high between a known label y and the estimated label y' in order not to predict the correct label y from the feature value z. The evaluator 3 learns such that the error (B) is low in order to allow prediction of a correct label y from the feature value z.

Thus, the maximization problem of the error (B) and the minimization problem of the error (B) are competed so that the feature value z gradually excludes information of the label y as the learning advances. The minimization problem of the error (A) may reduce excessive loss of information excluding the label y from the feature value z. This learning includes conversion from the input x to the feature value z excluding the information on the label y and conversion for reconfiguration from the feature value z and the label y to the input x.

In other words, for example, an evaluator may be introduced which is configured to evaluate how much information of the label y is included in the feature value z, that is, how much the feature value z and the label y may be separated. Thus, the learning may advance in the direction for direct separation of the feature value z and the label y. As a result, the learning apparatus 10 may execute learning for the direct purpose of searching for a feature value z suitable for analogy generation so that the precision for generation of analogy data may be improved.

### Functional Configuration

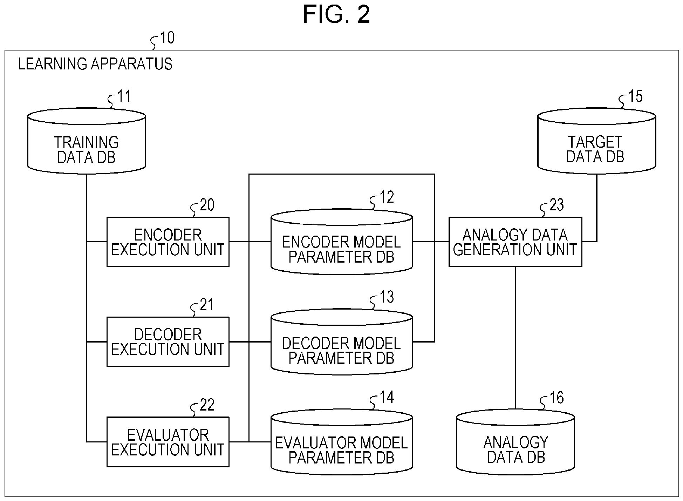

FIG. 2 is a functional block diagram illustrating a functional configuration of the learning apparatus 10 according to Embodiment 1. As illustrated in FIG. 2, the learning apparatus 10 includes a training data DB 11, an encoder model parameter DB 12, a decoder model parameter DB 13, an evaluator model parameter DB 14, a target data DB 15, and an analogy data DB 16. The learning apparatus 10 further includes an encoder execution unit 20, a decoder execution unit 21, an evaluator execution unit 22, and an analogy data generation unit 23.

The training data DB 11, the encoder model parameter DB 12, the decoder model parameter DB 13, the evaluator model parameter DB 14, the target data DB 15, and the analogy data DB 16 are stored in a storage device such as a memory or a hard disk. The encoder execution unit 20, the decoder execution unit 21, the evaluator execution unit 22, and the analogy data generation unit 23 may be implemented by processes executed by a processor. The evaluator execution unit 22 is an example of a first learning unit, and the encoder execution unit 20 is an example of a second learning unit.

The training data DB 11 is a database configured to store training data for a learning target. For example, the training data DB 11 may store a plurality of labeled data pieces (x, y) each including image data x and a label y.

The encoder model parameter DB 12 is a database configured to store parameters to be set in the encoder 1, and the stored parameters are updated through learning by the encoder 1. The decoder model parameter DB 13 is a database configured to store parameters to be set in the decoder 2, and the stored parameters are updated through learning by the decoder 2. The evaluator model parameter DB 14 is a database configured to store parameters to be set in the evaluator 3, and the stored parameters are updated through learning by the evaluator 3. The parameters may be known parameters such as weighting coefficients in a case where each learner applies a neural network (NN) including a convolution layer, a pooling layer, and a fully connected layer.

The target data DB 15 is a database configured to store target data on an analogy target for which data is inferred by using a learning result. For example, the target data DB 15 may store images of hand-written characters. The analogy data DB 16 is a database configured to store analogy data inferred from a target data stored in the target data DB 15 by using learned parameters.

The encoder execution unit 20 is a processing unit configured to execute the encoder 1 and to learn a parameter to be set in the encoder 1. More specifically, for example, the encoder execution unit 20 may receive input x of labeled data (x, y) stored in the training data DB 11. The encoder 1 may generate a feature value z from the input x and output it to the decoder execution unit 21.

The encoder execution unit 20 then learns (updates) a parameter stored in the encoder model parameter DB 12 such that an error (A) is low between the input x and the reconfigured data (reconstructed data) x' output from the decoder 2 for precise reconstruction of the input x. The encoder execution unit 20 learns a parameter stored in the encoder model parameter DB 12 such that the error (B) is high between the label y and the estimated label y' output from the evaluator 3 for suppression of prediction of a correct label y from the feature value z.

The encoder execution unit 20 may learn based on a double error, a cross-entropy, an inter-image distance, an image similarity or the like such that the error (A) is low between the input x and the reconstructed data x' output from the decoder 2. The double error is suitable for quantified data in a wide range and is particularly effective for an image or audio. The cross-entropy is suitable for data with an input x including categorical integers and is particularly effective for text data. The inter-image distance and the image similarity are indices for determination based on an error representing an inter-image distance that is the closest to the human intuition and is suitable for image data. More specifically, for example, the inter-image distance and the image similarity are based on an error in a similarity such as a Peak Signal-to-noise Ratio (PNSR) or a structural similarity (SSIM) or an intermediate representation of an image recognition neural network.

The encoder execution unit 20 learns such that the error (B) is high between the label y and the estimated label y' based on a cross entropy or a double error. The cross entropy is suitable for a case where the label y is an integer label, and the double error is suitable for a case where the label y is a real number label.

The decoder execution unit 21 is a processing unit implementing the decoder 2 and is configured to learn a parameter to be set in the decoder 2. More specifically, for example, the decoder execution unit 21 may input a feature value z output from the encoder 1 and the label y corresponding to an input x used for generating the feature value z to the decoder 2 so that the decoder 2 reconstructs a reconfigured data x'.

The decoder execution unit 21 learns a parameter to be stored in the decoder model parameter DB 13 such that the error (A) is low between the input x and the reconstructed data x' output from the decoder 2 for precise reconstruction of the input x.

The evaluator execution unit 22 is a processing unit implementing the evaluator 3 and is configured to learn a parameter to be set in the evaluator 3. More specifically, for example, the evaluator execution unit 22 may input a feature value z output from the encoder 1 to the evaluator 3, and the evaluator 3 may generate an estimated label y'.

The evaluator execution unit 22 learns a parameter to be stored in the evaluator model parameter DB 14 such that the error (B) is low between a known label y and the estimated label y' for precise reconstruction of the label y corresponding to the input x used for generating the feature value z.

The encoder 1, the decoder 2, and the evaluator 3 may learn repeatedly until the errors are equal to or lower than corresponding threshold values. The encoder 1, the decoder 2, and the evaluator 3 may repeat the learning a predetermined number of times. The encoder 1, the decoder 2, and the evaluator 3 may repeat the learning until one of the errors is equal to or lower than a corresponding threshold value.

The analogy data generation unit 23 is a processing unit configured to generate analogy data by using the encoder 1 and decoder 2 that have learned. More specifically, for example, the analogy data generation unit 23 may input data stored in the target data DB 15 to the encoder 1 applying parameters learned and stored in the encoder model parameter DB 12 and the decoder 2 applying parameters learned and stored in the decoder model parameter DB 13 to generate analogy data and store it in the analogy data DB 16.

For example, the analogy data generation unit 23 may execute the encoder 1 applying learned parameters and the decoder 2 applying learned parameters. The analogy data generation unit 23 may then input image data (a) stored in the target data DB 15 to the encoder 1 to generate a feature value z. Next, the analogy data generation unit 23 may input the feature value z and the target label (b) for the input image data (a) to the decoder 2. After that, the analogy data generation unit 23 stores the output from the decoder 2 in the analogy data DB 16 as analogy data from the image data (a).

### Flow of Learning Process

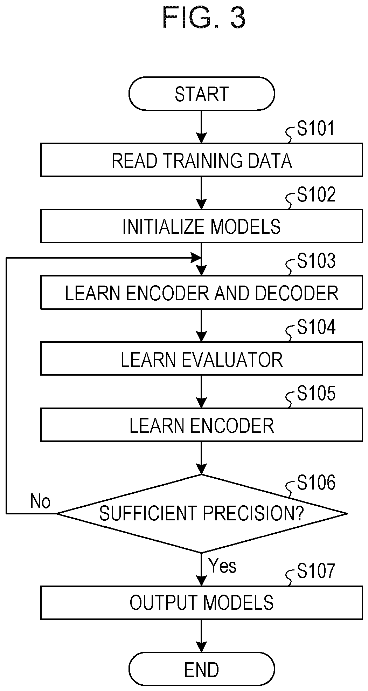

FIG. 3 is a flowchart illustrating a flow of a learning process. Referring to FIG. 3, the learning apparatus 10 reads training data from the training data DB 11 (S101) and initializes models of the encoder 1, the decoder 2, and the evaluator 3 (S102).

Next, the encoder execution unit 20 and the decoder execution unit 21 calculate the error (A) by using the training data and learn both of the encoder 1 and the decoder 2 (S103). The evaluator execution unit 22 calculates the error (B) and learns the evaluator 3 (S104). The encoder execution unit 20 learns the encoder 1 by using the error (B) (S105). The learning from S103 to S105 is not in order.

When the precision is not sufficient (S106: No), the processing in and subsequent to S103 is repeated. When the precision is sufficient (S106: Yes), the models are output (S107). For example, parameters stored when the update of the parameter DB is terminated and the learning ends are determined as parameters of the models (learning models).

### Flow of Analogy Process

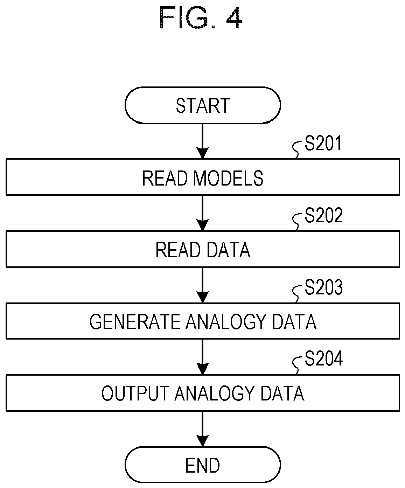

FIG. 4 is a flowchart illustrating a flow of an analogy process. Referring to FIG. 4, the analogy data generation unit 23 reads the models and executes the encoder 1 and decoder 2 applying the learned parameters (S201).

After that, the analogy data generation unit 23 reads data of an analogy target from the target data DB 15 (S202), and generates analogy data by using the encoder 1 and the decoder 2 (S203). After that, the analogy data generation unit 23 outputs the generated analogy data to the analogy data DB 16 (S204).

### Specific Example of Learning Process

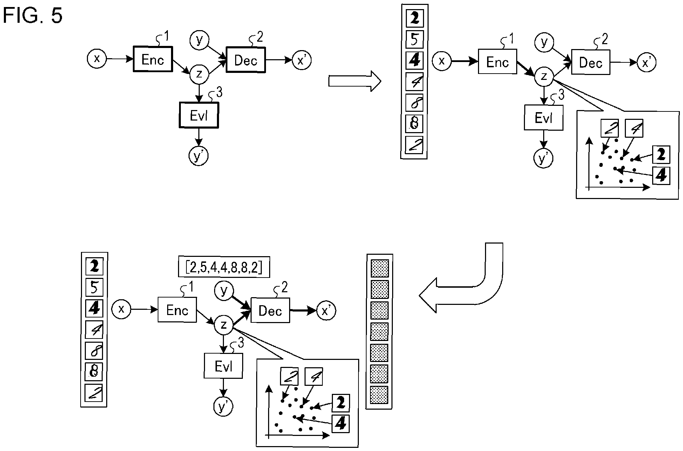

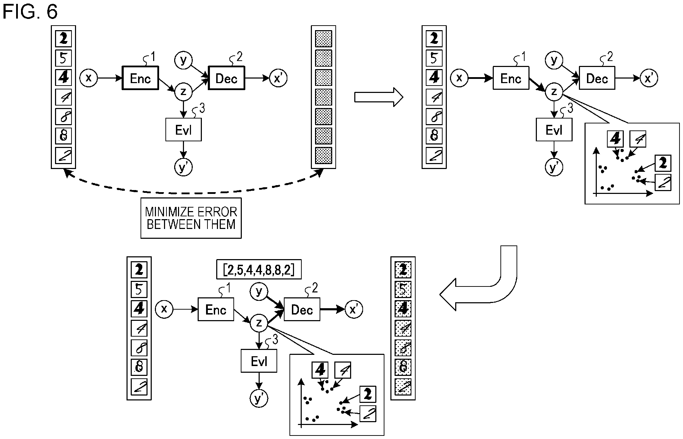

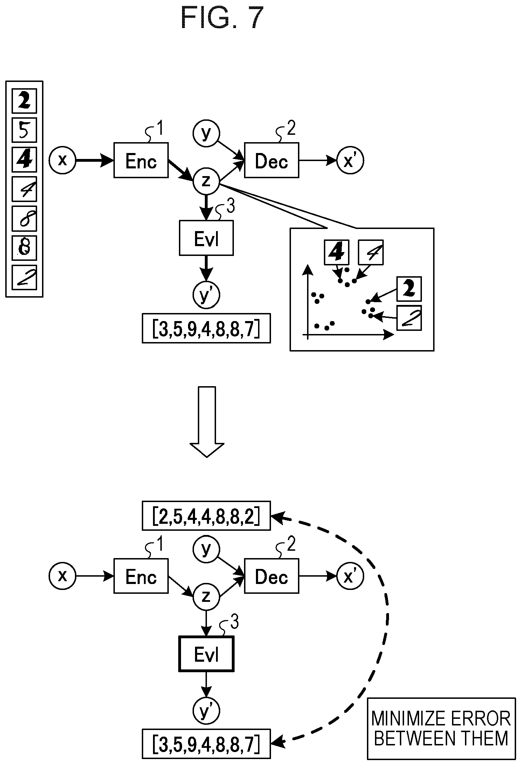

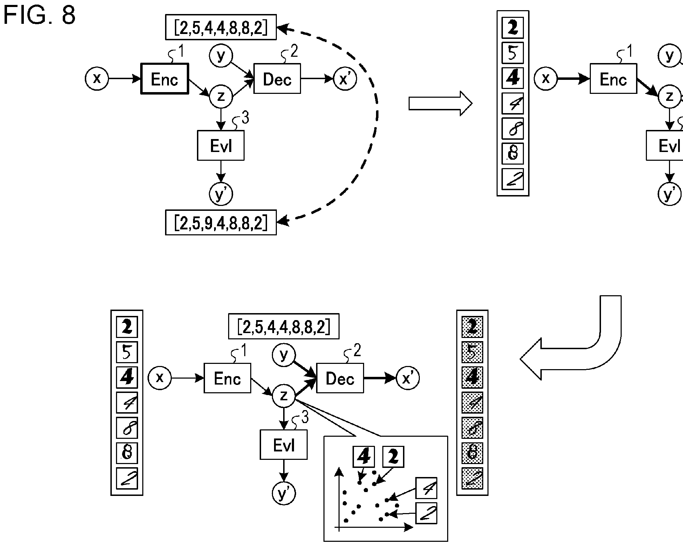

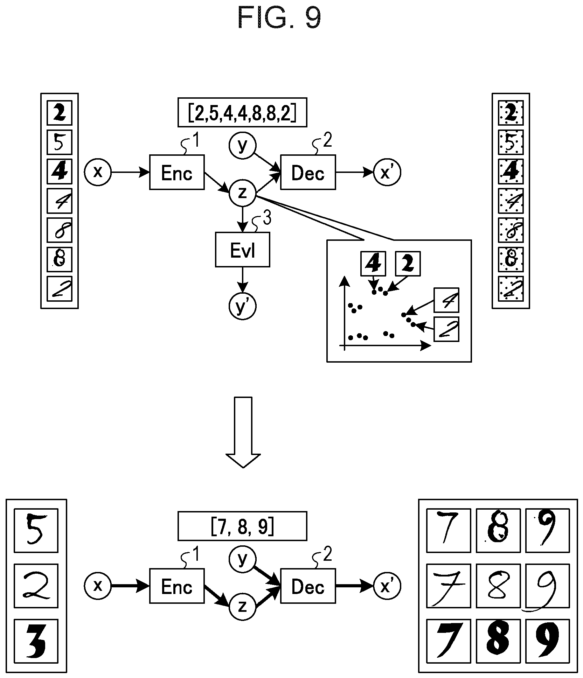

Next, with reference to FIG. 5 to FIG. 9, a specific flow, for example, of the learning process will be described. FIG. 5 illustrates from initialization to an initial stage of a learning process. FIG. 6 illustrates a learning initial period of the learning process. FIG. 7 illustrates learning of the evaluator 3. FIG. 8 illustrates learning of the encoder 1. FIG. 9 illustrates a learning result and an analogy result.

Hereinafter, the encoder 1, the decoder 2, and the evaluator 3 will be called Enc 1, Dec 2, and Evl 3, respectively, and the following description assumes modeling in a neural network. However, the modeling method is not limited to the neural network but may apply any of other modeling methods. A two-dimensional vector is applied as a feature value, for example.

### Initialization

As illustrated in FIG. 5, first, the learning apparatus 10 initializes the Enc 1, the Dec 2, and the Evl 3. For example, the learning apparatus 10 substitutes random number values into internal parameters of neural networks of the learners.

Next, the learning apparatus 10 inputs to Enc 1 character data of "2, 5, 4, 4, 8, 8, 2" that are image data of hand-written characters as input data x and outputs their feature values z. At this point in time, because learning has not been executed yet, a meaningful feature value z is not acquired even when the input data x are converted. In other words, for example, because the input data x are just converted to feature values z, the distribution of the feature values z does not make sense. Referring to the input data, the first image "2" and the third image "4" are in similar handwritings, and the second image "5" and the sixth image "8" are in similar handwritings, and the fourth image "4", the fifth image "8", and the seventh image "2" are in similar handwritings.

After that, the learning apparatus 10 inputs to Dec 2 the feature values generated from the input data and the labels "2, 5, 4, 4, 8, 8, 2" corresponding to the feature values and thus reconstructs reconfigured data x' corresponding to the input data. For example, the learning apparatus 10 may input to the Dec 2 a feature value z acquired from the input data of the character "2" and the label "2" and may thus acquire reconstructed data x' of the character "2" that is the input data. Next, the learning apparatus 10 may input to the Dec 2 the feature value z acquired from input data of the character "5" and the label "5" and may thus acquire reconstructed data x' of the character "5" that is input data. In this manner, the learning apparatus 10 reconstructs an input image from a feature value and a label. In this point in time, because learning has not been performed, the acquired reconstructed data x' is not meaningful. In other words, for example, because each input data x is converted to an arbitrary feature value z, the reconstructed data x' may not correspond to the input data x correctly.

### Learning Initial Period

As illustrated in FIG. 6, the learning apparatus 10 learns the Enc 1 and the Dec 2 such that the error (A) is low between the input data x and the reconstructed data x'. More specifically, for example, the learning apparatus 10 solves a problem of minimization of a square error of the input data x and the reconstructed data x' by back propagation and updates parameters in the Enc 1 and the Dec 2.

After the learning, the learning apparatus 10 inputs to the Enc 1 image data of input data "2, 5, 4, 4, 8, 8, 2" as input data x and outputs the corresponding feature values z. In other words, for example, while the input data x and the reconstructed data x' get closer, the feature values z contain more information on the label y. This means, for example, that the information on the label y is contained in the space of the feature value z, and the distribution of the feature values z is clustered with the label y. The same input data is applied in the cases in FIG. 5 and FIG. 6, for example, but they may be different data.

After learning the Enc 1 and the Dec 2, the learning apparatus 10 inputs to the Dec 2 the feature values generated from the input data and the labels "2, 5, 4, 4, 8, 8, 2" corresponding to the feature values and thus generates reconstructed data x'. Then, the reconstructed data x' start corresponding to the input data x correctly.

### Influence of Learning of Evaluator 3

As illustrated in FIG. 7, the learning apparatus 10 acquires labels y' for input data x from feature values z by using the Evl 3. For example, the learning apparatus 10 may acquire a label "3" against the input data of a character "2", label "5" against the input data of a character "5", and a label "9" against the input data of a character "4".

Then, the learning apparatus 10 learns the Evl 3 such that the error (B) is low between the labels y input to the Dec 2 and the estimated label y' generated from the feature values z by the Evl 3. More specifically, for example, the learning apparatus 10 solves a problem of minimization of the cross entropy of the label y and the estimated label y' by back propagation and updates parameters of the Evl 3. As a result, with the Enc 1 in the current point in time, the Evl 3 may generate a more correct labels y.

### Influence of Learning of Encoder 1

As illustrated in FIG. 8, the learning apparatus 10 learns the Enc 1 such that the label y input to the Dec 2 is separated from the estimated label y' output from the Evl 3. In other words, for example, the learning apparatus 10 learns the Enc 1 such that the error (B) increases. More specifically, the learning apparatus 10 solves a problem of maximization in cross entropy between the label y and the estimated label y' by back propagation and updates the parameters of the Enc 1. For example, the learning apparatus 10 learns such that feature values z generated from input data x are not clustered with labels corresponding to the input data. Alternatively, the learning apparatus 10 learns such that the feature values z generated from the input data x are independent from each other.

The learning apparatus 10 acquires labels y' against input data x by using the Evl 3. The maximization learning excludes the information of the labels y from the space of the feature values z. Therefore, the feature values z are distributed dependently on the handwriting and line width which are information other than the labels y. In other words, for example, the feature values are not clustered with the label "2" and "5" input to the Dec 2, and the feature values z are distributed independently from each other.

The learning apparatus 10 inputs to the Dec 2 the feature values generated from input images and the labels "2, 5, 4, 4, 8, 8, 2" corresponding to the feature values and thus reconstructs reconstructed data x'. The feature values z no longer include information on the labels y. Therefore, the difference increases between the input data x and the reconstructed data x'. In other words, for example, because the Enc 1 changes, the result of the reconstruction in the Dec 2 changes, and the performance of the reconstruction of the input data x decreases.

### Learning Result

The learning illustrated in FIG. 5 to FIG. 8 is repeated so that the Enc 1 and the Dec 2 may be learned with a sufficiently low error between the input image data x and the reconstructed data x', and, at the same time, the Enc 1 is learned so that the converted feature values z do not include information of the labels y. Therefore, as illustrated in FIG. 9, when the learning apparatus 10 inputs to the Enc 1 the input data x with "2, 5, 4, 4, 8, 8, 2" that are image data of characters, feature values z may be extracted which do not include information regarding the labels y, are not related to the labels y but include features of handwriting of the characters. As a result, the learning apparatus 10 may reconstruct the input data x with high precision from input of the feature values z and the labels y to the Dec 2.

FIG. 9 illustrates generation of an analogy by using learned model below. The learning apparatus 10 inputs input data to the Enc 1, converts it to a corresponding intermediate representation z, and input the intermediate representation z and a desired label y to the Dec 2 so that analogy data is obtained with the changed label of the input data. In this case, a target label is input for an input image so that an analogy image is output which holds information (such as hand writing and line width) other than the label. In other words, for example, when character data of "5" and a label "7" are input thereto, the learning apparatus 10 may reconstruct character data of "7" with the handwriting and line width of the input data "5" without reconstructing "5".

### Learning in the related art

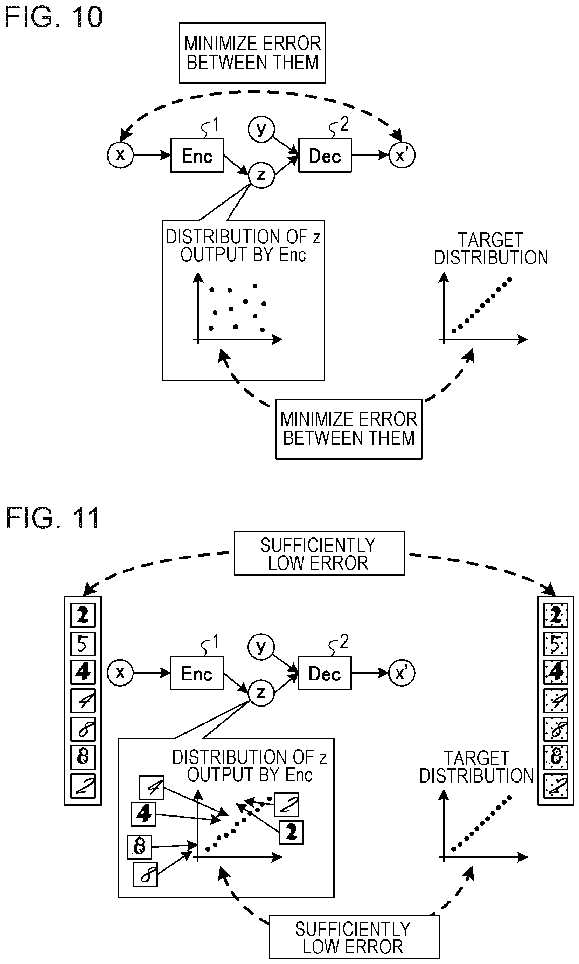

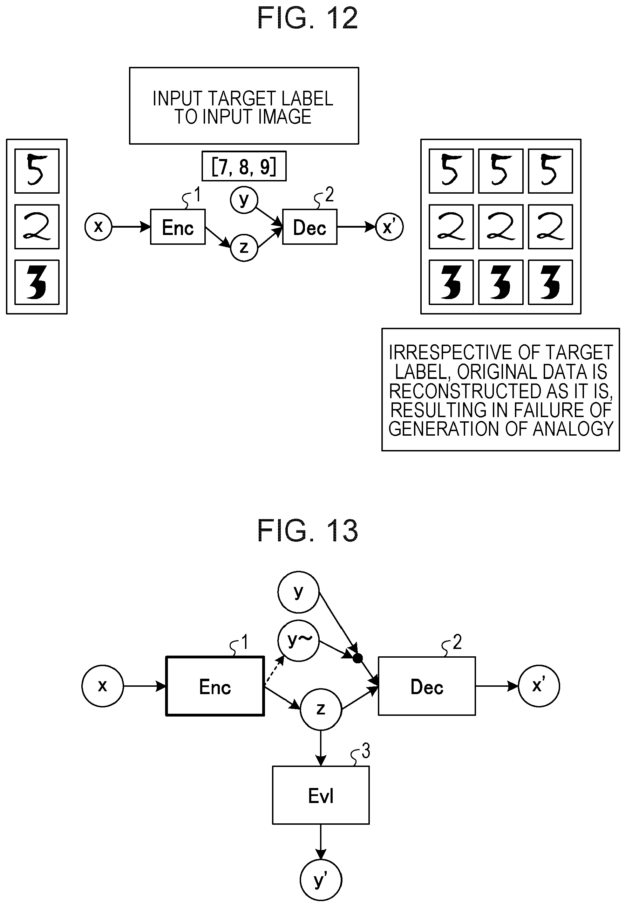

Next, known learning for generating an analogy will be described. FIG. 10 and FIG. 11 illustrate learning in the related art, and FIG. 12 illustrates a learning result in the related art.

As illustrated in FIG. 10, a learning apparatus in the related art (hereinafter, which may be called an apparatus in the related art) includes an Enc and a Dec. Labeled data is input to the Enc to generate a feature value z. The apparatus of the related art inputs a label y corresponding to the input x and the feature value z to the Dec to generate a reconfigured data (reconstructed data) x'. The apparatus of the related art learns the Enc and the Dec such that the difference is low between the original data x input to the Enc and the reconfigured data x' and learns the Enc such that the difference is low between the distribution of the feature value z acquired by converting the original data x in the Enc and a target distribution.

This learning is repeated so that the learning as illustrated in FIG. 11 is repeated. In other words, for example, the apparatus of the related art learns parameters for a sufficiently low error between the input original data x and the reconfigured data x' and learns parameters for a sufficiently low error between the distribution of feature values z output from the Enc and a target distribution. This means, for example, the apparatus of the related art may acquire a learning result with minimization of the two errors where the feature values z include the information regarding the label y. Thus, the apparatus of the related art may estimate the label y from the feature values z.

Therefore, the apparatus of the related art may not provide a converter from an input x to a feature value z, which is suitable for analogy generation. As a result, the analogy generation may not be achieved, as illustrated in FIG. 12. In other words, for example, the Dec is learned to ignore the label y, and, as a result, the feature value z includes information on the label y. A label y that is input separately may not be used for highly precise reconstruction. For example, in the apparatus of the related art, when character data of "5" and a label "7" are input, the data may be reconstructed without utilizing the separately input label "7". This means that the output is not an analogy based on handwriting and a line width of the input data "5", but character data reconstructing the input data "5" is directly reconstructed.

### Effects

As described above, the learning apparatus 10 may learn a converter which converts an input x to a feature value z separated from a label y without depending on the size of the feature value z that is an intermediate representation and used data. Therefore, the learning apparatus 10 may improve precision of the generation of the analogy data. The learning apparatus 10 may reduce the man-hour for acquiring a converter for suitable data x for analogy generation.

### Embodiment 2

Having described the embodiment, embodiments may be implemented in various different modes excluding the aforementioned embodiment. A different embodiment will be described below.

### Apparatus Examples

Having described the example that an analogy is generated by using learning by the learners and learning results by the learning apparatus 10, embodiments are not limited thereto. The learning and the analogy generation may be executed by separate apparatuses.

### Use of Unlabeled Data in Combination

FIG. 13 illustrates a learning example using unlabeled data in combination. As illustrated in FIG. 13, "y∼" may be added to an output from the Enc in the learning apparatus 10 according to Embodiment 1 so that unlabeled data may be used. More specifically, for example the Enc learns for a low error between y and y∼ against the labeled data (x, y) and outputs a correct y to the Dec. The Enc outputs the estimated y∼ instead of y to Dec with respect to the unlabeled data(x). In other words, with a label y, the label y is output to the Dec. Without a label y, a label y∼ estimated by the Enc is output to the Dec. Thus, because unlabeled data with low human cost may be used, the amount of training data may be increased for higher precision of generation of analogy data.

### System

The described or illustrated processing procedures control procedures, specific names, and information including data and parameters may be arbitrarily changed unless otherwise indicated.

The components of the illustrated apparatuses are functionally conceptual and may not necessarily be physically configured as illustrated. In other words, specific forms of distributions and integrations of the apparatuses may not be limited to the illustrated ones, for example. All or a part of the apparatuses may be functionally or physically distributed or integrated in arbitrary units in accordance with their loads and usages. All or an arbitrary part of processing functions to be implemented in the apparatuses may be implemented by a CPU and a program analyzed and executed by the CPU or may be implemented as wired logic hardware.

### Hardware Configuration

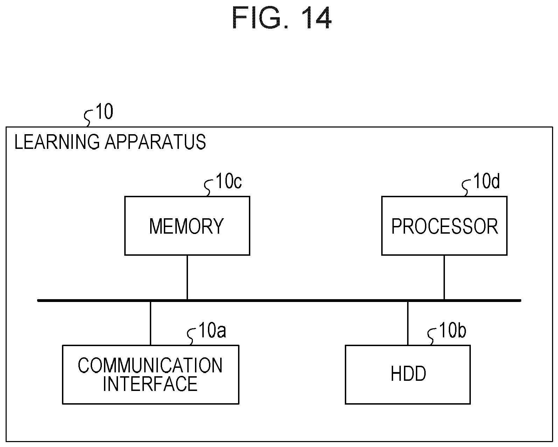

FIG. 14 illustrates a hardware configuration example. As illustrated in FIG. 14, the learning apparatus 10 has a communication interface 10a, a hard disk drive (HDD) 10b, a memory 10c, and a processor 10d.

The communication interface 10a may be a network interface card configured to control communication with other apparatuses. The HDD 10b is an example of a storage device configured to store a program and data.

Examples of the memory 10c may include a random access memory (RAM) such as synchronous dynamic random access memory (SDRAM), a read only memory (ROM), and a flash memory. Examples of the processor 10d may include a central processing unit (CPU), a digital signal processor (DSP), a field programmable gate array (FPGA), and a programmable logic device (PLD).

The learning apparatus 10 operates as an information processing apparatus configured to execute a learning method by reading and executing a program. In other words, for example, the learning apparatus 10 executes programs configured to execute the equivalent functions to those of the encoder execution unit 20, the decoder execution unit 21, the evaluator execution unit 22, and the analogy data generation unit 23. As a result, the learning apparatus 10 may execute processes for executing the equivalent functions to those of the encoder execution unit 20, the decoder execution unit 21, the evaluator execution unit 22, and the analogy data generation unit 23. Programs according to other embodiments are not limited to be executed by the learning apparatus 10. For example, embodiments of the present disclosure are applicable to a case where another computer or server executes the program or a case where they in combination execute the program.

The program may be distributed over a network such as the Internet. The program may be recorded in a computer-readable recording medium such as a hard disk, a flexible disk (FD), a CD-ROM, a magneto-optical disk (MO), and a digital versatile disc (DVD) and may be read from the recording medium to be executed.

## Claims

1. A computer-readable storage medium storing a learning program causing a computer to execute a process comprising:
by using a discriminator configured to generate an estimated label based on a feature value generated by an encoder of an auto-encoder and input data, causing the discriminator to learn such that a label corresponding the input data and the estimated label are matched; and
by using the discriminator, causing the encoder to learn such that the label corresponding to the input data and the estimated label are separated.

2. The storage medium according to claim 1, wherein in the causing the encoder to learn, causing the encoder to learn such that feature values corresponding to a plurality of input data pieces are distributed independently from each other.

3. The storage medium according to claim 1, wherein in the causing the encoder to learn, causing the encoder to learn such that feature values corresponding to a plurality of input data pieces are not clustered by labels corresponding to the plurality of input data pieces.

4. The storage medium according to any one of claims 1 to 3, the process further comprising:
by using a decoder of the auto-encoder configured to reconstruct the input data based on the label corresponding to the input data and the feature value, generating reconfigured data corresponding to the input data; and
causing the encoder and the decoder to learn such that there is a low difference between the input data and the reconfigured data.

5. The storage medium according to claim 4, the process further comprising:
inputting analogy target data to the learned encoder and generating the feature value;
inputting the feature value and a target label being an analogy target against the analogy target data to the decoder; and
generating analogy data corresponding to the analogy target data.

6. A learning method performed by a computer, the method comprising:
by using a discriminator configured to generate an estimated label based on a feature value generated by an encoder of an auto-encoder and input data, causing the discriminator to learn such that a label corresponding the input data and the estimated label are matched; and
by using the discriminator, causing the encoder to learn such that the label corresponding to the input data and the estimated label are separated.

7. A learning apparatus comprising:
a first learning unit for causing a discriminator, configured to generate an estimated label based on a feature value generated by an encoder of an auto-encoder and input data, to learn such that a label corresponding the input data and the estimated label are matched; and
a second learning unit for causing the encoder to learn such that the label corresponding to the input data and the estimated label are separated.
